# EUROPEAN PATENT SPECIFICATION

(11) **EP 1 051 010 B1**
(45) Date of publication and mention of the grant of the patent: **10.11.2004**
(21) Application number: 99303041.0
(22) Date of filing: 20.04.1999
(51) Int. Cl.: H04L 29/06, H04L 12/56

(54) **Mobile IP supporting quality of service for foreign network with foreign agent and plurality of mobile nodes**
Mobiles IP mit Dienstqualität für fremdes Netz mit fremdem Agent und mehreren mobilen Knoten
IP mobile supportant qualité de service pour réseau externe avec agent extérieur et plusieurs noeuds mobiles

(43) Date of publication of application: 08.11.2000
(73) Proprietor: LUCENT TECHNOLOGIES INC., Murray Hill, New Jersey 07974-0636 (US)
(72) Inventor: Chen, Xiaobao, Swindon, Wilts SN5 7EP (GB)
(74) Representative: Williams, David John

(56) References cited:
- RAJAGOPALAN B: "Mobility and quality of service (QoS) in the Internet" MOBILE MULTIMEDIA COMMUNICATIONS, PROCEEDINGS OF 3RD INTERNATIONAL WORKSHOP ON MOBILE MULTIMEDIA COMMUNICATIONS, PRINCETON, NJ, USA, 25-27 SEPT. 1996, pages 129-135, XP002114826 1997, New York, NY, USA, Plenum, USA ISBN: 0-306-45772-5
- SINGH R ET AL: "RAT: a quick (and dirty?) push for mobility support" PROCEEDINGS WMCSA'99. SECOND IEEE WORKSHOP ON MOBILE COMPUTING SYSTEMS AND APPLICATIONS, PROCEEDINGS OF WMCSA99: 2ND IEEE WORKSHOP ON MOBILE COMPUTING SYSTEMS AND APPLICATIONS, NEW ORLEANS, LA, USA, 25-26 FEB. 1999, pages 32-40, XP002115363 1999, Los Alamitos, CA, USA, IEEE Comput. Soc, USA ISBN: 0-7695-0025-0
- YEOM H Y ET AL: "IP MULTIPLEXING BY TRANSPARENT PORT-ADDRESS TRANSLATOR" PROCEEDINGS OF THE SYSTEMS ADMINISTRATION CONFERENCE. LISA, 29 September 1996 (1996-09-29), pages 113-121, XP002046289

## Description

### Field of the Invention

The present invention relates to messages conforming to the mobile Internet protocol (mobile IP) and sent from a host node in a network to a mobile node, and particularly to maintain a desired quality of service when any mobile host node changes its point of network attachment in a foreign network including a foreign agent.

### Background to the Invention

Current internet protocol (IP) technology and mobile IP technology enables a host terminal or host node which is normally connected in a particular network (the nodes 'home' network) to temporarily connect into a different network (a 'foreign' network) and still receive IP packets or messages sent to the host terminal at its address in the home network. Such a host terminal, which changes its point of network attachment, is known as a mobile node. To still receive IP packets in the foreign network the mobile node must register with a so-called 'home agent' in its home network. In registering with its home agent, the mobile node provides the home agent with a 'care-of address where it can be addressed in the foreign network. The home agent then monitors traffic in the home network, and if the home agent identifies an IP packet which is carrying a destination address corresponding to the mobile node's home address in the home network, it intercepts the IP packet. The home agent then 're-packages' the IP packet and sends it to the node at the 'care-of address in the foreign network. The 'care-of address may be a co-located care-of address or a foreign agent care-of address.

The technique of directing an IP packet, destined for an address in the home network, to a 'care-of address in the foreign network is known, in mobile IP, as 'tunneling'. It is important in tunneling the IP packet to the 'care-of address that certain information concerning the original IP packet is retained in the re-packaged IP packet. For example, as well as maintaining the original payload (or information portion) of the IP packet, the mobile node at the 'care-of address must still be able to identify in the 're-packaged' IP packet the source address from which the IP packet was originally sent and the home address of the mobile node in the home network. One technique known in mobile IP for 'tunneling' an IP packet to a mobile node 'care-of address encapsulates the original IP packet into a new IP packet as the IP packet payload. That is the original IP packet is incorporated as the payload (or information portion) of the new IP packet without any change to its content. The 'care-of address is added to the new IP packet as the new destination address and the source address of the new IP packet is identified as the home agent. On receipt the mobile node at the 'care-of address removes the 'wrapping' on the new IP packet to recover the original IP packet.

One disadvantage with this technique is that the repackaged IP packet does not facilitate the support of quality of service provisions in conformance with existing IP quality of service standards.

Each IP packet has associated therewith, and included in the IP packet, flow identification information which identifies the quality of service associated with the IP packet transmission. This flow identification information is present in fixed locations of the IP packet, where quality of service (QoS) capable routing/switching elements can locate it and operate in dependence on it. However, with the encapsulation tunneling technique the flow identification information included in the IP packet by the source originating the IP packet is not available between the home agent and the 'care-of address.

Thus the encapsulation technique in conventional mobile IP (one of which is known as IP-in-IP encapsulation) shields the real source address (i.e. the address of the correspondent node) and real destination address (i.e. the mobile node's home address), as well as the protocol ID in the IP packets, from the home agent to the mobile node. In addition, encapsulation mobile IP also changes the payload infrastructure (the original IP header becomes part of the payload) and fails flow differentiation if routers are not changed accordingly so as to be able to detect the modifications or changes. Changes or even slight modifications of routers often requires a large amount of redesign and re-placement of all existing routers. This far more complicates the control and management of the networks. It may also cause problems in terms of security control and inter-operability.

The quality of service (QoS) provisions proposed to be used in the Internet are defined by standards, and in IP one known standard for quality of service signaling is called RSVP. RSVP (Resource Reservation Protocol) is used in the Integrated Services Model (IntServe) quality of service framework defined by IETF. The Integrated Services Model was designed to provide special handling for certain types of traffic, provide mechanisms for applications to choose between multiple levels of delivery services for its traffic, and to provide signaling for quality of service parameters at Layer 3 in the OSI RM.

IntServ defines two classes of services. The Controlled Load Class provides traffic delivery in the same way as when the network is unloaded ("better than best delivery"). The Guaranteed QoS Service Class delivers traffic for applications with a bandwidth guarantee and delay bound.

IntServ requires QoS capable nodes and a signaling protocol to communicate QoS requirements between applications and nodes and between nodes.

RSVP is the QoS signaling protocol used by IntServ. RSVP provides receiver QoS requests to all router nodes along the transit Path of the traffic, maintains the soft-state (Path/Reservation states), and results in resources being reserved in each router.

For RSVP/IntServ quality of service to operate, the flow identification information must be in a fixed location in the IP packets. An RSVP session is configured by the host terminals exchanging so-called Path and Reservation messages prior to data transmission.

To enable the quality of service control across the transit path between peer host terminals, each host terminal must therefore have the functionality to configure the necessary messages and recognise quality of service requests corresponding to an RSVP session.

Existing RSVP does not specify how to specifically process Path and Reservation (Resv) messages in the scenario of mobility control based on mobile IP. Moreover, the 'tunneling' of standard mobile IP (e.g. IP-in-IP encapsulation) disables the correct flow identification and classes of service differentiation.

Documents Rajagopalan B.: "Mobility and quality of service (QoS) in the Internet", MOBILE MULTIMEDIA COMMUNICATIONS, PROCEEDINGS OF 3RD INTERNATIONAL WORKSHOP ON MOBILE MULTIMEDIA COMMUNICATIONS, PRINCETON, NJ, USA, 25-27 Sept. 1996, pages 129-135 and Singh R. et al.: "RAT: a quick (and dirty ?) push for mobility support" PROCEEDINGS WMCSA'99. SECOND IEEE WORKSHOP ON MOBILE COMPUTING SYSTEMS AND APPLICATIONS, PROCEEDINGS OF WMCSA99: 2ND IEEE WORKSHOP ON MOBILE COMPUTING SYSTEMS AND APPLICATIONS, NEW ORLEANS, LA, USA, 25-26 FEB. 1999, pages 32-40, relate to problems concerned with mobility and Quality of Service (QoS) in the Internet.

It is therefore an object of the present invention to provide a technique which enables the quality of service requirement determined by the source of the message to be supported throughout the routing of the message to a mobile node's 'care-of address when the mobile node is temporarily attached in a foreign network including a foreign agent.

### Summary of the Invention

According to the present invention there is provided a method of establishing an IP quality of service session between a correspondent node and a mobile node, the mobile node having a home address in a home network and being temporarily connectable in a foreign network having a foreign agent, wherein IP packets are directed to the mobile node from the correspondent node via the home network, the quality of service session being maintained in dependence on flow identification information in the IP packets, the method comprising: determining whether the flow identification information of a quality of service session to be configured matches the flow identification information of an existing quality of service session; responsive to a match, allocating temporary flow identification information to the quality of service session to be configured.

The temporary flow identification information may be allocated between the home network and the foreign network. The steps of determining a match and allocating temporary flow identification information may be carried out in the foreign network. The temporary flow identification information may be notified to the home network. The flow identification information may include an identification of the port numbers used by an application at the mobile node, wherein a temporary port number is allocated responsive to a match between such port numbers.

The invention also provides a mobile IP network arrangement adapted to establish an IP quality of service session between a correspondent node and a mobile node, the mobile node having a home address in a home network and being temporarily connectable in a foreign network having a foreign agent, wherein IP packets are directed to the mobile node from the correspondent node via the home network, the quality of service session being maintained in dependence on flow identification information in the IP packets, the mobile IP network arrangement having means for determining whether the flow identification information of a quality of service session to be configured matches the flow identification information of an existing quality of service session; the means being responsive to a match for allocating temporary flow identification information to the quality of service session to be configured.

The means may be provided in the foreign network. At least two mobile nodes may be temporarily located in the foreign network, each being associated with the foreign agent and a respective one of at least two means, wherein the means may be further adapted to determine whether the flow identification information of a quality of service session between one of the mobile nodes and a correspondent node matches the flow identification information of a quality of service session between the other of the mobile nodes and a correspondent node. At least two mobile nodes are temporarily connected in the foreign network, the means being associated with each mobile node.

The invention may also advantageously additionally include a method of directing an internet protocol IP packet to the mobile node, the IP packet having a header portion including the destination address to which the IP packet is to be sent, the method comprising the steps of: receiving, in the home network, the IP packet including a destination address corresponding to the home address of the mobile node; modifying the IP packet by: removing the home address of the mobile node from the header portion of the IP packet and replacing it with the foreign agent care-of address; appending a mobile node identifier to the IP packet; and transmitting the modified IP packet.

The invention may further advantageously include the steps of: generating, in the foreign network, a modified reply message having a source address of the mobile node's care-of address and a destination address of the correspondent node; and transmitting the modified reply message.

### Brief Description of the Figures

Figure 1 illustrates a network set-up including a home network, a correspondent network, and a foreign network;
Figures 2(a) to 2(c) illustrate the standard format of an IP packet;
Figure 3 illustrates schematically a memory of a home agent of the home network;
Figure 4(a) illustrates an IP packet constructed by the correspondent network for transmission to a mobile node in the home network, and Figure 4(b) illustrates the modification of that IP packet to re-direct it to the foreign network according to the prior art;
Figure 5(a) illustrates an IP packet constructed by the correspondent network for transmission to a mobile node in the home network, and Figure 5(b) illustrates the modification of that IP packet to re-direct it to the foreign network according to an alternative technique;
Figure 6 illustrates the network set-up of Figure 1 in which the foreign network includes a foreign agent;
Figure 7(a) illustrates an IP packet constructed by the correspondent node for transmission to a mobile node in the home network, and Figure 7(b) illustrates the modification of that IP packet to re-direct it to the foreign network according to the present invention when the foreign network includes a foreign agent;
Figure 8 illustrates schematically a memory of the foreign agent of Figure 6;
Figure 9 illustrates schematically a modified memory of the home agent of Figure 6;
Figure 10(a) illustrates the IP packets of a Path message of a first section of a quality of service session in mobile IP supporting RSVP;
Figure 10(b) illustrates the IP packets of a Path message of a second section of a quality of service session in mobile IP supporting RSVP;
Figure 10(c) illustrates the general end-to-end structure of a Reservation message in general IP;
Figure 10(d) illustrates the general end-to-end structure of a Reservation message of a second section of a quality of service session in mobile IP supporting RSVP;
Figure 10(e) illustrates the general end-to-end structure of a Reservation message of a first section of a quality of service session in mobile IP supporting RSVP;
Figure 11 illustrates the steps of performing a preferred implementation of an RSVP operation in mobile IP;
Figure 12 illustrates the network arrangement of Figure 1 adapted to support RSVP in mobile IP;
Figure 13 illustrates the network arrangement of Figure 12 further adapted to show two mobile nodes supported by a common foreign agent;
Figure 14 illustrates a portion of the format of a memory layout in elements of the network of Figure 13;
Figure 15 illustrates the steps for operating the network arrangement of Figure 13; and
Figure 16 illustrates the network scenario of Figure 13 still further adapted.

### Description of Preferred Embodiment

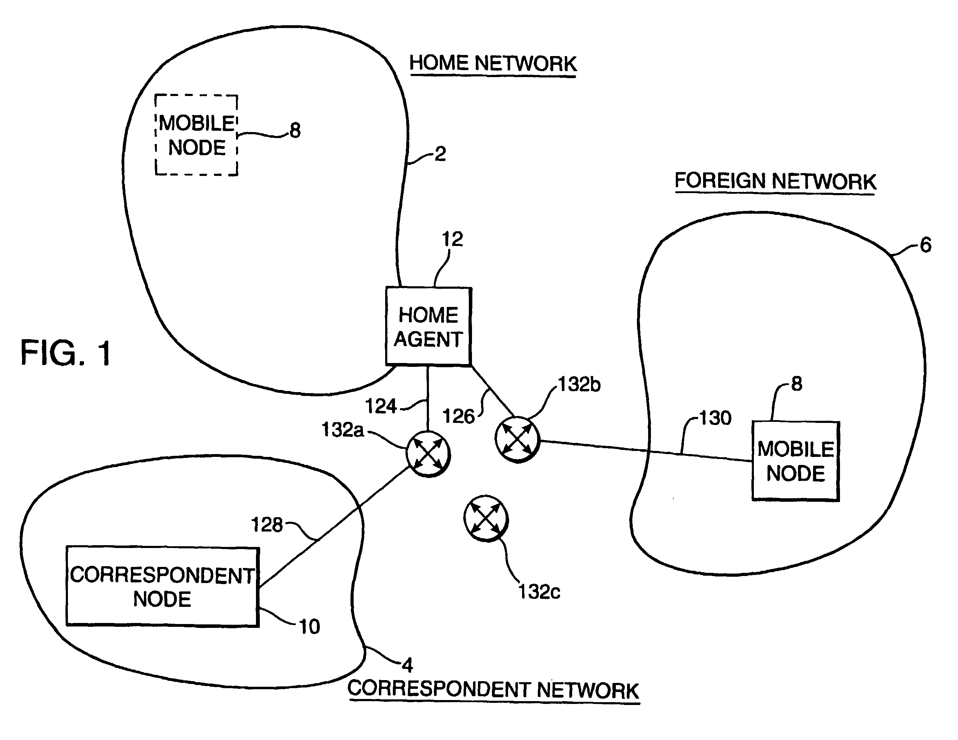

Referring to Figure 1 there is shown a typical network set-up. A mobile node MN 8 to which a message is to be sent is normally located in a home network 2. The mobile node MN 8 normally resides in the home network 2 at a particular address. This address is not necessarily a static IP address: the mobile node may be located at any physical point in the network, but a particular IP address is associated with the mobile node itself (rather than the physical point of connection). The home network may physically span a small office environment, or may span a number of countries.

The mobile node MN 8 may be connected to the home network 2 by a wireless LAN, infrared link, wireless telephone link or via a direct Ethernet or token ring network hook-up. The term 'mobile node' does not imply that the node is connected to the network via a wireless link: rather it implies that the mobile node may move outside the home network 2 into a foreign network such as the foreign network 6 of Figure 1, as will be discussed in further detail hereinafter.

The arrangement of Figure 1 also shows a correspondent network 4 including a correspondent node CN 10. For the purposes of illustrating the present invention, it is assumed that the correspondent node CN 10 of the correspondent network sends a message to the mobile node 8 of the home network 2. The correspondent node may also be in a foreign network, that is a network independent of and distinct from the home network 2. However, the term foreign network is reserved for use to refer to a network which hosts a mobile node which normally resides in a different network (its home network). For the purposes of this illustrative example, the mobile node 8 of the home network 2 has moved to the foreign network 6. Thus the mobile node MN 8 is shown in the home network 2 in dashed lines to indicate that it is normally present there, and is shown in the foreign network FN 6 in a solid line to indicate that it is temporarily present in the foreign network 6.

The terms correspondent node and correspondent network are reserved for use to describe communication peers of the mobile node 8. A correspondent node is a node (which may be another mobile node) with which a mobile node is currently communicating: either receiving an IP packet or transmitting an IP packet. A correspondent network is used to refer to the network to which the correspondent node is connected. It should be appreciated that the mobile node may be communicating with a correspondent node in its own home network, and therefore the correspondent network may be the home network itself.

As can be seen from Figure 1, and as will be discussed further hereinafter, the home network 2 further includes a home agent 12.

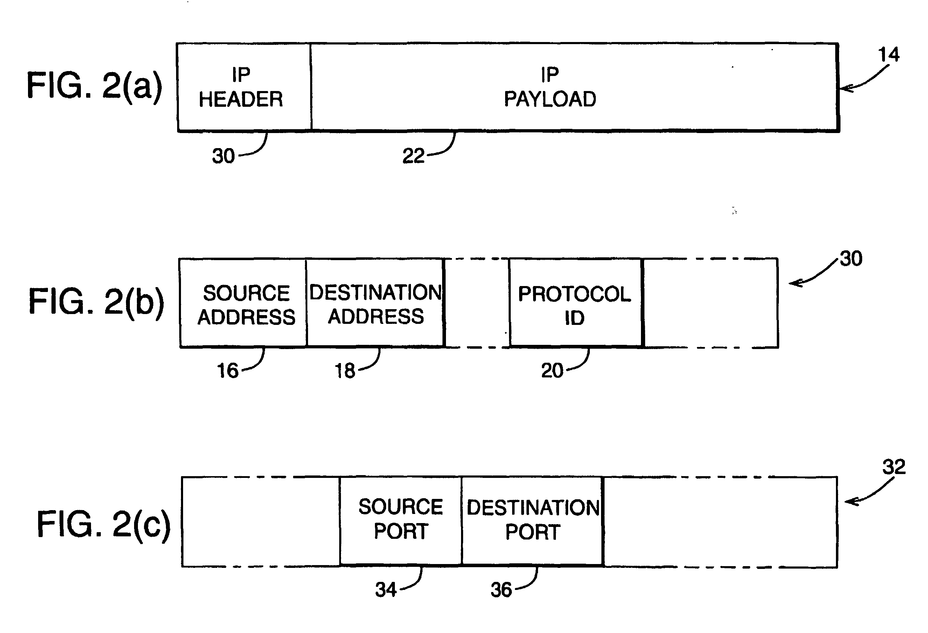

A brief example of the 'normal' communication between the correspondent node CN 10 and the mobile node MN 8 will now be given. Referring to Figure 2(a), there is shown the general structure of an IP packet 14 sent by the correspondent node CN 10 to the mobile node MN 8.

An IP packet transmitted between networks, generally designated by reference numeral 14 and illustrated in Figure 2(a), comprises an IP header 30, and an IP payload 22. The IP payload 22 is the information portion of the IP packet to be delivered to the mobile node 8. The parts of the IP packet which are relevant to the present discussion are illustrated in

Figures 2(b) and 2(c). The IP header 30, shown in Figure 2(b), includes a source address portion 16, a destination address portion 18, and a protocol ID portion 20. The IP header 30 contains other fields which are not shown in Figure 2(b) since they are not relevant to the present explanation.

Referring to Figure 2(c), the IP payload 32 includes a source port number 34 and a destination port number 36. Again, the IP payload includes other fields which are not relevant for the purposes of the present explanation.

The source address 16 is the IP address of the host terminal (correspondent node) from which the IP packet is sent, and the destination address 18 is the IP home address of the host terminal (mobile node) to which the IP packet is to be sent. The source port number 34 is the port number used by an application at the correspondent node 10 associated with the IP packet 14. The destination port number is the port number used by an application at the mobile node 8 to which the IP packet is being sent. In addition to other uses, the protocol ID 20 is one of the indications of the quality of service to be supported in transmitting the IP packet from the source applications to the destination applications. As will be appreciated by one familiar with the art, the destination and source addresses are used by routing switches between the correspondent node and the mobile node in the home network to route the IP packet to its destination.

When the routers or routing switches support quality of service (QoS), in some QoS control provisions, such as RSVP and IntServ, the protocol ID 20 is used together with the source and destination addresses 16 and 18, plus the communication port numbers of end applications (i.e. the source port number 34 and the destination port number 36) for differentiating flows and imposing the necessary QoS control.

The QoS control imposed on the data traffic flows at the intermediate routers is system dependent. For example, it can be the so-called WFQ (Weighted Fair Queuing ) or CBQ (Classed Based Queuing). They are not standard and vendor specific but usually independent of the actual user's protocol ID.

The IETF's IntSer/RSVP standard is defined to provide a QoS specification and signaling mechanism but not a QoS control mechanism. Intserve/RSVP is independent of the actual QoS control mechanisms, such as WFQ, CBQ etc.

The status based on which QoS control is performed is set up in the routing switches prior to data transmission by means of the specific quality of service signaling protocol, such as RSVP.

A known way of routing an IP packet from the correspondent node to the mobile node MN 8 when it has moved to a position in the foreign network will now be described. When the mobile node MN 8 moves to a foreign network, it must register with the home agent HA 12 of the home network so as to still be able to receive its messages when residing in the foreign network. This may be achieved by the mobile node sending a registration message to the home agent HA 12 once it has taken up position in the foreign network. A mobile node can be considered to have taken up position in the foreign network once it has been connected to the foreign network and been allocated a care-of address.

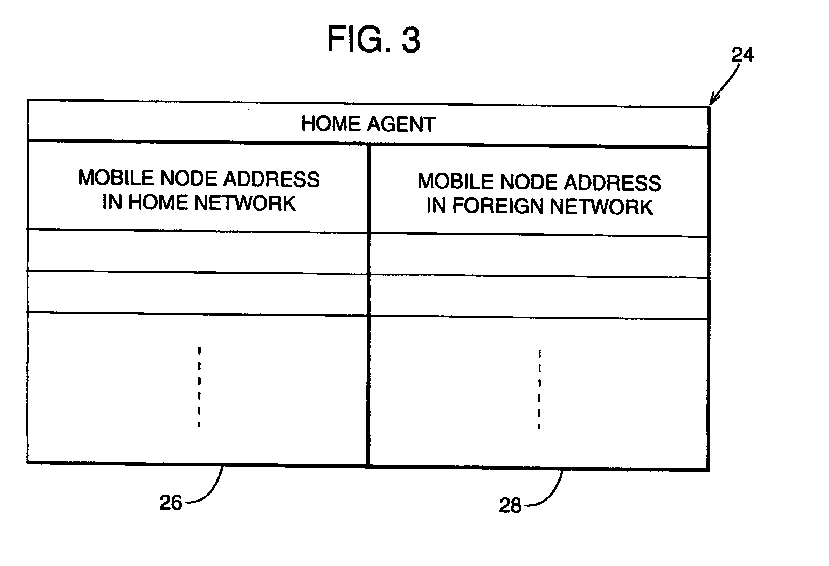

Referring to Figure 3, the home agent HA 12 includes a memory or look-up table generally designated by reference numeral 24. In one column of the memory the home agent HA 12 stores the addresses of the mobile nodes normally resident in the home network that have registered with the home agent as being temporarily resident in a foreign network. In another column 28 of the memory 24 the home agent stores the 'care-of' address that the mobile node has moved to in the foreign network, as well as other associated states such as SPI (Security Parameter Index).

The technique by which the home agent records the current care-of address of the mobile node and its home address (i.e. the mobile node address in the home network), is usually implementation dependent. This invention does not exclude different approaches for achieving the location-awareness of a mobile node at the home agent.

The operation of the home agent in directing an IP packet from the correspondent node to the mobile node in the foreign network according to one current known technique will now be described.

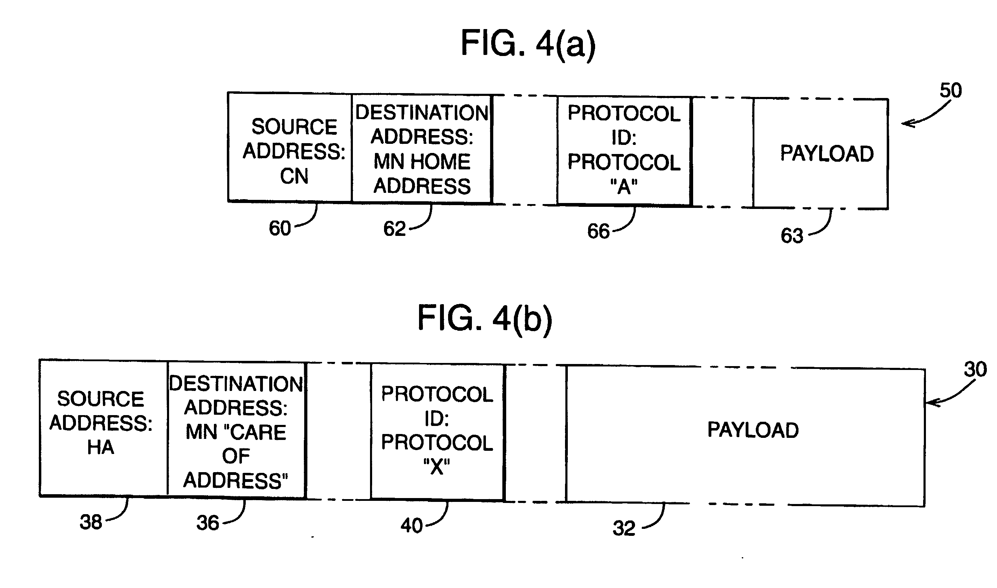

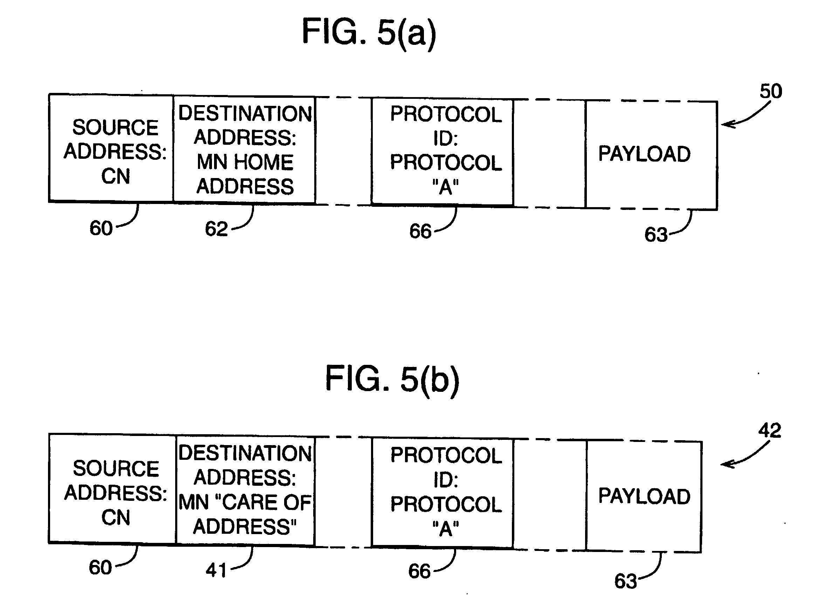

The correspondent node CN 10 constructs an IP packet having a format identical to that shown in Figure 2(a). The thus constructed IP packet from the correspondent node is illustrated by the IP packet 50 in Figure 4(a), and includes a source address 60 identifying the correspondent node address, a destination address 62 identifying the home address of the mobile node in the home network, and a protocol ID 66, nominally referred to as protocol 'A'. The source port number and destination port number are not shown in Figures 4 and 5 since they are not relevant to the explanation. In the example shown in Figure 1, after moving to the foreign network 6 the mobile node 8 is allocated a unique 'care-of' address of its own and registers directly with the home agent 12 in the home network. This is known as CO-COA (co-located care-of address) working mode. An alternative working mode is known as FA-COA (foreign agent care-of address) working mode. The manner in which the mobile node may register with the home agent is well-known in mobile IP, and is not relevant to the present invention and therefore not discussed herein.

The IP packet constructed by the correspondent node 10 is identical whether the mobile node is positioned in its home network 2 or in the foreign network 6, as the correspondent node is not required to have knowledge of the movement of the mobile node. Mobile IP with route optimisation does, however, require that the correspondent node is aware of the current location of the mobile node.

After a mobile node registers with the home agent using its current care-of address, the home agent will take a mobile node to be in a foreign network and starts intercepting the IP packets 50 destined to that mobile node home address and tunneling those IP packets to the mobile node's current care-of address.

The home agent monitors all IP packets coming into the home network to see if the destination address in the home network (the portion 62 of the IP header fields 52) matches one of the mobile node home addresses stored in column 26 of the home agent memory 24.

If a match is detected, the home agent creates a new IP packet, which is illustrated in Figure 4(b). The original IP packet from the correspondent node, including the destination address, source address, protocol ID, and other IP header fields and payload is used to form part of the payload of the new IP packet. That is, the original IP packet is not processed at all by the home agent but is merely incorporated, wholly unchanged, as the payload 32 of the new IP packet 30.

The home agent then adds a destination address 36, source address 38 and protocol ID 40 to the new IP packet 30.

The destination address 36 is the address in the foreign network where the IP packet is to be sent, that is the 'care-of address of the mobile node MN 8. The source address 38 is the address of the home agent from which the new IP packet 30 is being sent, i.e. the home agent.

The home agent protocol ID is the protocol ID determined by the home agent itself. The home agent will always attach the same protocol ID to the new IP packet 30 regardless of the protocol ID 20 included in the original IP packet by the correspondent node, since the home agent does not look at the protocol ID 20 of the original IP packet 14. The protocol ID 40 is designated nominally as protocol 'X'. For the conventional mobile IP's IP-in-IP's encapsulation, the protocol ID is always changed to "1" by the home agent.

Thus the 'real' source and destination addresses (60 and 62 of Figure 4(a)) have been moved into the payload of the new IP packet and the other necessary flow identification information such as source and destination port numbers in the original IP payload have also been wrapped up in the payload of the new IP packet.

Thus, the original identity of a flow from the correspondent node to the mobile node is lost and quality of service fails as the IP packet is routed from the home agent to the foreign network.

The IP packet 30 is then sent by the home agent, and is routed to arrive at the mobile node's 'care-of address in the foreign network. Once the IP packet 30 arrives at the 'care-of address the mobile node strips the outer layers of the new IP packet 30 to reveal the original IP packet 50.

Thus, it can be appreciated that in this known arrangement, the required flow identification information including the protocol ID in the original IP packet is shielded by the home agent and thus becomes unrecognizable by the routing switches (or IP routers) for QoS provision between the home agent and the mobile nodes 'care-of' address.

The routing of an IP packet from the correspondent node to the mobile nodes 'care-of address according to an alternative preferred implementation, which technique can be called non-encapsulation mobile IP, will now be described. In the scheme according to this alternative preferred implementation, the flow identification and differentiation information such as the original source address, the original source and destination port number, and the source protocol ID placed in the original IP packet by the correspondent node remains unchanged and thus is advantageously available to all the routing switches between the correspondent node and the mobile nodes 'care-of address.

The correspondent node constructs the IP packet 50 identically as before as shown in Figure 5(a). On arrival at the home network, the home agent 12 determines whether the mobile node to which the IP packet is addressed is registered as having moved to a foreign network, by checking the contents of its memory 24 as before. On detection of the destination address in its memory column 26, the home agent intercepts the IP packet.

In this implementation, the home agent HA adapts the IP packet 14 by removing the destination address 62 of the mobile node 8 in the home network 2, and replacing it with the destination address (i.e. the 'care-of address) of the mobile node MN 8 in the foreign network 6. The new IP packet 42 thus comprises the payload 63 of the original IP packet 50, the source address 60 of the original IP packet 50, and the protocol ID 66 of the original IP packet 50. The destination address 62 of the original IP packet is replaced by the new destination address 41 (the mobile node's care-of address).

Of course one familiar with the art will understand that it may be necessary to amend any error checking provided in the original IP packet 50 in view of the change in the destination address. The thus constructed new IP packet is sent to the 'care-of address in the foreign network. The IP packet is thus routed to the mobile node with the flow information including the source address of the correspondent node, and the original protocol ID as well as all other original flow identification information: it can be appreciated that as the payload remains unchanged, the source and destination port numbers are available in the same locations in the IP packet as before.

The flow identification information is thus recognized as the IP packet from the same correspondent node featuring the same QoS requirements to the routers between the home agent and the 'care-of address as well as between the correspondent node and the home agent regardless of the movement of the mobile node. Advantageously, in this arrangement (co-located care-of address working mode), the new IP packet 42 constructed by the home agent according to the present invention is the same length as the original IP packet provided by the correspondent node.

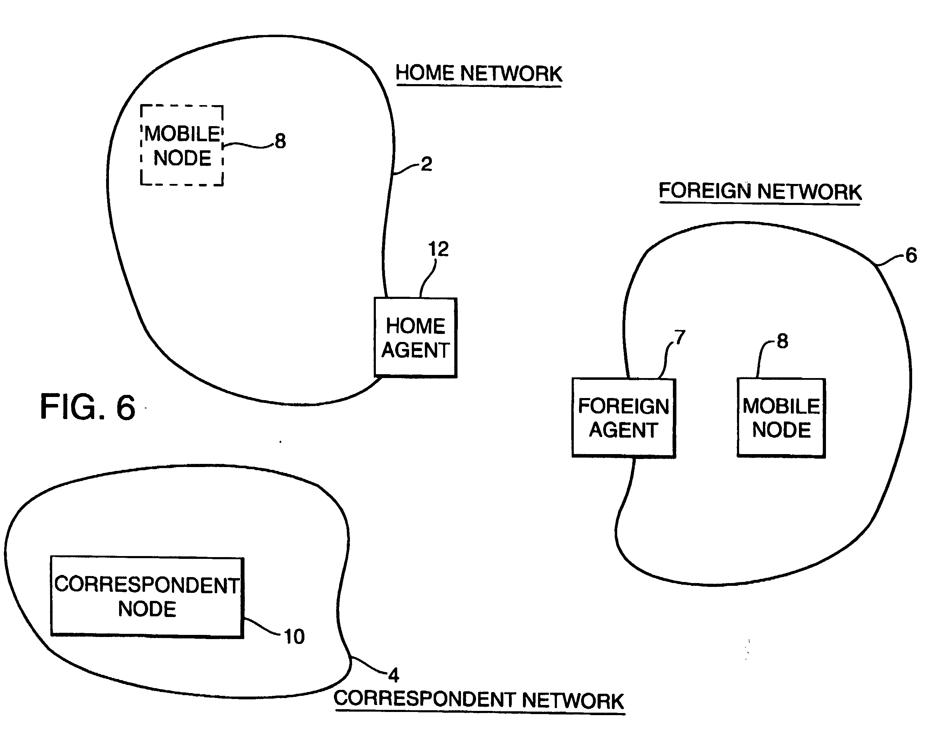

Referring to Figure 6 there is shown an alternative network set-up to that of Figure 1. This network set-up is the same as that of Figure 1, other than that the foreign network 6 is provided with a foreign agent 7. Thus Figure 6 illustrates the foreign agent care-of address working mode. A description of the application of the non-encapsulation mobile IP technique in this foreign agent care-of address working mode will now be given.

In this arrangement, the mobile node registers with the foreign agent when it is positioned in the foreign network. The registration of the mobile node with the foreign agent is in accordance with standard mobile IP. The mobile node is aware that the foreign network has a foreign agent either by the foreign agent broadcasting its presence, or by the mobile node soliciting an acknowledgement from the foreign agent of its presence.

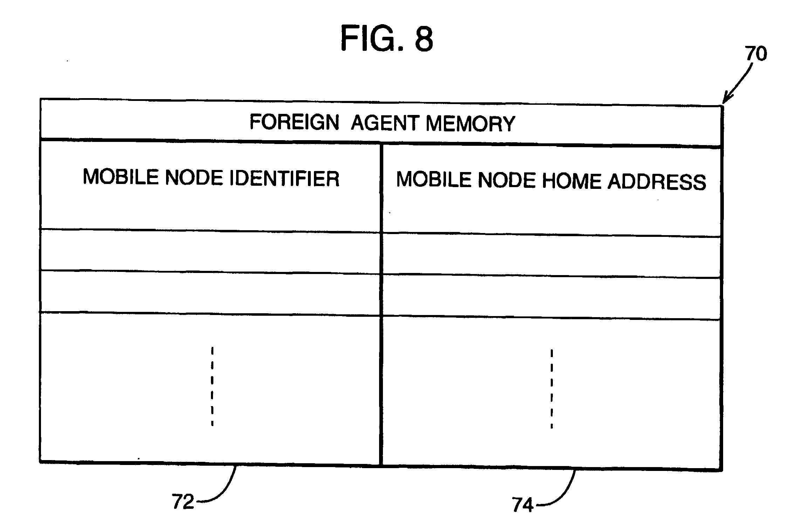

Once the mobile node is aware of the existence of the foreign agent, it registers with the foreign agent in accordance with standard mobile IP. The foreign agent itself has a memory or look-up table. Referring to Figure 8, the memory 70 of the foreign agent has a column 74 for storing the actual home IP address of a mobile node temporarily connected in the foreign network. The foreign agent additionally allocates to each mobile node registered with it a unique mobile node identifier (MNID) which can be used to distinguish between many mobile nodes registered with the foreign agent. The memory 70 of the foreign agent has an additional column 72 in which the unique mobile node identifier (MNID) associated with each mobile node's home address is stored.

Once a mobile node has registered with the foreign agent and the MNID allocated, based on the home address of the mobile node the foreign agent delivers the mobile nodes registration request to the home agent by means of which the home agent is notified of the mobile node's current care-of address and the MNID of the mobile node.

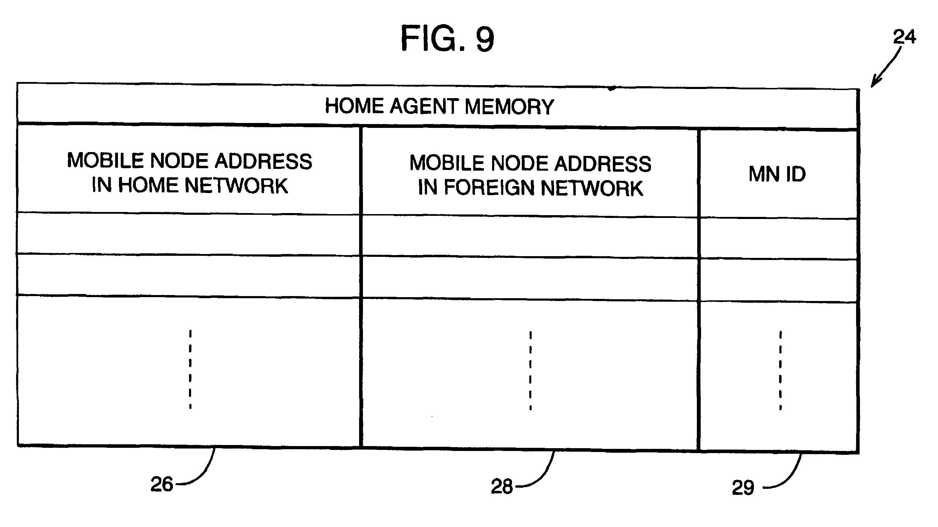

The home agent then stores in its memory 24 the address of the foreign agent as the mobile node's address in the foreign network, and also stores with such address the unique mobile node identifier additionally communicated by the foreign agent. The memory 24 of the home agent is thus modified to store the MNID in a further column 29, as shown in Figure 9.

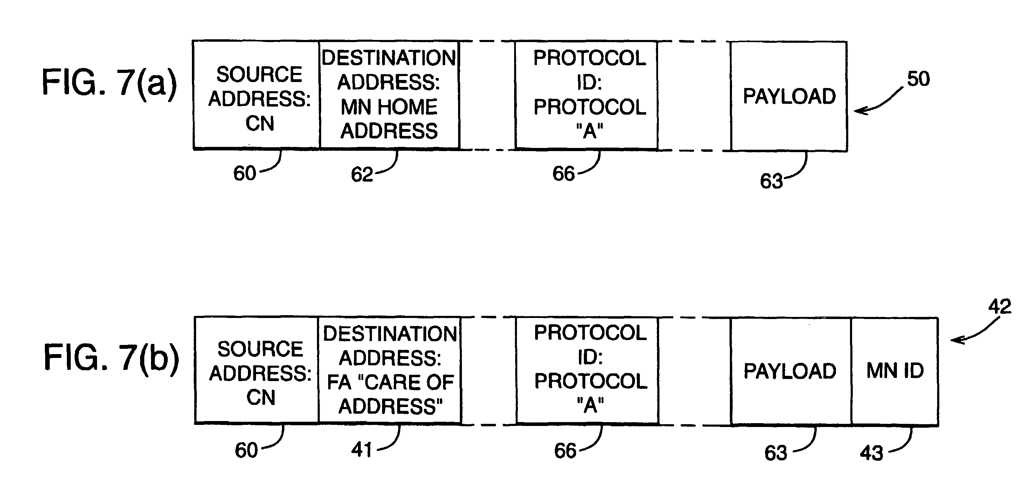

The correspondent node constructs the IP packet 50 identically as before as shown in Figure 7(a). On arrival at the home network, the home agent 12 determines whether the mobile node to which the IP packet is addressed is registered as having moved to a foreign network, by checking the contents of its memory 24 as before. On detection of the destination address in its memory column 26, the home agent intercepts the IP packet.

In this implementation, the home agent HA adapts the IP packet 14 by removing the destination address 62 of the mobile node 8 in the home network 2, and replacing it with the destination address (i.e. the foreign agent 'care-of address) of the mobile node MN 8 in the foreign network 6. This destination address will be the address of the foreign agent in the foreign network, and not the actual address at which the mobile node is currently attached. The new IP packet 42 thus comprises the payload 63 of the original IP packet 50, the source address 60 of the original IP packet 50, and the protocol ID of the original IP packet 50. The destination address 62 of the original IP packet is replaced by the new destination address 41 (foreign agent care-of address).

In addition, the home agent appends the mobile node identifier for the mobile node as an extra field 43 to the message 42. It is essential, in non-encapsulation mobile IP, that when the IP packet is being redirected to a foreign network foreign agent, that a unique identifier for the mobile node be included. The destination address 41 is the address of the foreign agent, and not the address of the mobile node. Without the mobile node identifier the foreign agent is not able to distinguish which mobile node the IP packet is intended for.

The thus constructed new IP packet 42 is sent to the foreign agent 'care-of address in the foreign network. The foreign agent receives the IP packet and retrieves therefrom the mobile node identifier 42 which is contained in the IP packet 42. The foreign agent compares the mobile node identifier in the IP packet to the mobile node identifiers in the column 72 of its memory, and retrieves the home address of the mobile node from the column 74. The foreign agent replaces the destination address (the foreign agent care-of address) in the IP packet with the mobile nodes home address and forwards the message on to the mobile node in the foreign network.

In the above-described non encapsulation mobile IP technique of tunneling, the flow information is not hidden, and therefore the quality of service is apparently supported. However, for RSVP quality of service this is not the case. The reason for this is that for RSVP to correctly function, the transmit path followed by a so-called Reservation (Resv) message (routed hop-by-hop following the same hops as indicated by a so-called Path message) must be the same path but in the reverse direction of the Path message. That is the source address of the Path message must match the destination address of the Reservation (Resv) message, and the destination address of the Path message must match the source address of the Reservation message. The below example of setting up an RSVP session in the network structure of Figure 1 illustrates why the non-encapsulation mobile IP, as described hereinabove, is not sufficient to support quality of service.

To support an RSVP session when the mobile node has moved into a foreign network as shown in Figure 1, a two-section RSVP session must be set up: a first section of the RSVP session ("section 1") between the correspondent node 10 and the home agent 12, and a second section of the RSVP session ("section 2") between the home agent and the mobile node 8.

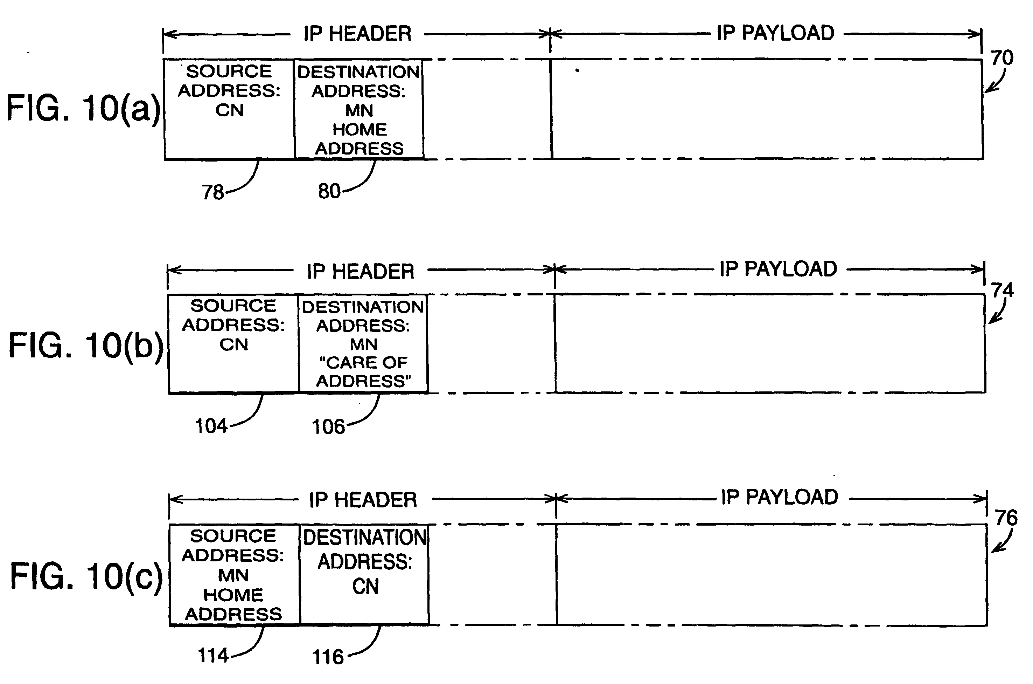

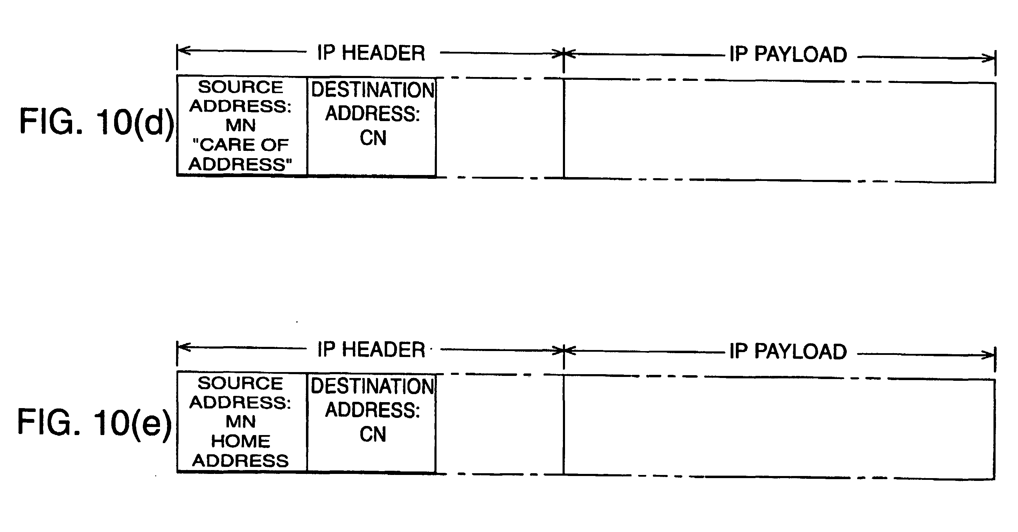

The correspondent node 10, which in this example is assumed to be sending a message to the mobile node 8, sends a standard RSVP Path message including IP packets 70 having the general format shown in Figure 10(a) on line 128.

The IP packets of the messages used in an RSVP session do not have the format shown in Figures 2(a) to 2(c). The IP packets of Figures 2(a) to 2(c) are IP packets of data messages. The IP packets 70 of the Path message of Figure 10(a) have a source address 78 corresponding to the address of the correspondent node, and a destination address 80 corresponding to the address of the mobile node 8 in the home network (the mobile nodes home address).

The IP packets of the Path message (and other RSVP messages) additionally include other flow identification information in the payload of the IP packets. One skilled in the art will be familiar with the other flow identification information.

The IP packet of the Path message is routed from the correspondent node 10 to the home network 2 via a plurality of routing switches, represented by routing switch 132a, on lines 128 and 124.

If the routing switch 132a supports quality of service, then it extracts the flow identification information in the IP payload of the Path message IP packets, and stores this flow identification information. This flow identification information includes: the source address, the destination address, the source port number, the destination port number, and the protocol ID which will be included in all IP data packets transmitted from the source to the destination after the quality of service session has been set up. The routing switch 132a routes the IP packets of the Path message to another routing switch, and then additionally stores with the flow identification information extracted from the IP packet the address of the routing switch to which it sent the message (the next hop) and the address of the routing switch from which it received the message (the previous hop). Although in Figure 1 it is illustrated that the IP packets reach the home network 2 via one routing switch 132a, in practice the IP packets may reach the home network via a plurality of routing switches, and each routing switch stores the flow identification information extracted from the IP packets of the Path message, together with the identity of the routing switch from which the IP packet was sent and the routing switch to which the IP packet was sent.

Thus the IP packets of the Path message travel from the correspondent node to the home network through the routing network. Each routing switch retains the address of the previous hop from which the IP packet was sent together with the next hop to which the IP packet was sent, and additionally the flow identification information for the IP packet. The routing switches also process the other traffic related information in the Path message, the nature of which is not relevant to a discussion of the present invention.

After the quality of service session has been set up, when another IP packet arrives at a particular routing switch having the same flow identification information that has been stored in the routing switch memory, the routing switch forwards it to the exact same next hop, the address of which is stored in memory.

Thus at successive hops, each routing switch (provided it supports RSVP quality of service) retrieves the flow identification information from the fixed locations of the IP packets of the Path message and stores them in memory, together with the addresses of the next and previous hops. Thus the flow identification information in the IP packets helps to uniquely identify a message flow, so that all IP packets associated with that message flow can be routed from the source to the destination through the exact same network path.

The home agent then intercepts the IP packets of the Path message intended for the mobile node. When the home agent intercepts the IP packets of the Path message destined for the mobile node 8, it redirects them to the foreign network. In this example non-encapsulation mobile IP is utilised, and new IP packets are created for transmission to the foreign network as a new, or modified, Path message. The IP packets 74 of the modified Path message sent by the home agent are shown in Figure 10(b). The home agent replaces the destination address of the IP packets of the Path message, such that the destination address 106 of the IP packets 74 of the modified Path message is the mobile node's care-of address in the foreign network. As discussed hereinabove, in non-encapsulation mobile IP all other elements of the IP packets 70 remain unchanged.

This modified Path message is routed to the mobile node's care-of address via routing switches represented by the single routing switch 132b, on lines 126 and 130.

As described hereinabove in relation to the Path message of the first section, in the Path message of the second section the IP packets of the modified Path message are similarly transmitted based on the flow identification information therein. The next and previous hops are similarly stored by the routing switches.

The mobile node receives the modified Path message and initiates the Reservation (Resv) message for the second section by creating a Reservation message for transmission having IP packets 76 of the general format as illustrated in Figure 10(c).

It will be understood by one skilled in the art that the IP packets of a Reservation message (Resv) are transmitted hop-by-hop back along the identical network path as the IP packets of the Path message. Thus the source and destination addresses of the IP packets of the Reservation messages are actually the next and previous hops. The value of the source and destination addresses are thus determined dynamically as the Reservation messages transit through the path. Thus the structure of the IP packets 76 of the Reservation message shown in Figure 10(c) is actually representative of the transport layer of the Reservation messages. Thus the structure shown in Figure 10(c) illustrates the general concept of a Reservation message, that is the originating source address and the ultimate destination address. This analysis of the Reservation message is somewhat artificial, but serves to best illustrate the principle of RSVP.

The mobile node 8 identifies the source address 114 as the mobile node's home address. Standard mobile IP provides that the applications on a mobile node itself should not be required to be aware of the change of the mobile nodes network attachment points. Therefore regardless of the location of the mobile node (whether in its home network or a foreign network) the mobile node always generates IP packets which identify the source address as being the mobile node's homes address. The mobile node includes a destination address in the Reservation message of the correspondent node address. This is because, in accordance with standard mobile IP, the mobile node is aware that the message came from the correspondent node, and is not aware of the redirection via the home agent. For IP packets sent from the mobile node to the correspondent node in standard mobile IP, they are routed as normal IP packets as if the mobile node were 'at home' in the home network.

Comparing the IP packets of the Path and Reservation messages shown Figures 6(b) and 6(c), the conditions for a successful RSVP session do not exist. The source address of the Reservation message 76 is different to that of the destination address of the Path message 74.

This results in the failure of the routing of the Reservation (Resv) message hop-by-hop following the same network path as that set by the IP packets of the Path message. The Reservation message for the first section (between the home agent and the correspondent node) is never initiated because the second section fails.

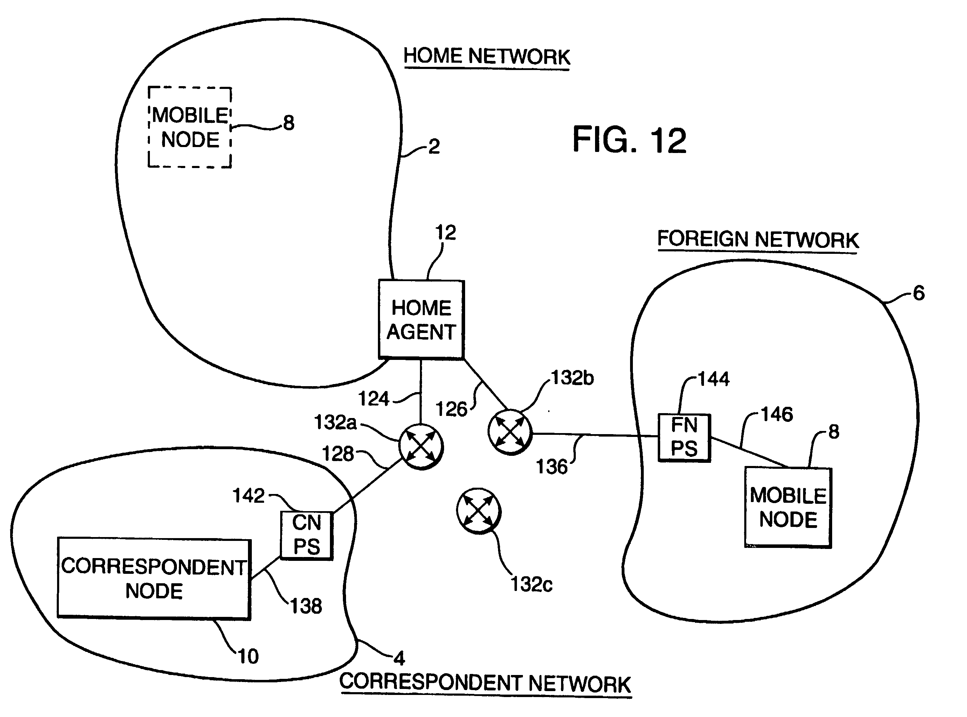

Referring to Figure 12, there is shown the network arrangement of Figure 1 adapted to enable non-encapsulation mobile IP to support RSVP. In the arrangement shown a proxy server is introduced into the correspondent network and the foreign network. However, it should be understood from the following description that the functionality of the proxy server may in practice be incorporated into the host terminals to which the proxy servers are connected. A further explanation is given hereinbelow following the explanation of the arrangement of Figure 12.

Referring to Figure 12, the networks of Figure 1 are adapted such that the correspondent network 4 additionally includes a correspondent network proxy server 142 and the foreign network 6 additionally includes a foreign network proxy server 144. The correspondent node 10 is connected to the correspondent node proxy server 142 via a network link 138. The correspondent network proxy server connects to the routing switches via a network link 128. The foreign network proxy server 144 connects to the mobile node 8 in the foreign network 6 via a network link 146. The foreign network proxy server connects to the routing switch 132b via the network link 136.

An example of the operation of the adapted network of Figure 12 for sending a message from the correspondent node 10 to the mobile node 8 in the foreign network using non-encapsulation mobile IP in which RSVP is supported will now be described.

Each host terminal which requires quality of service provision in a network which does not have its own quality of service capability needs to be aware of the existence of a proxy server in the network. That is, there must be a process by which the host terminals can discover proxy servers. There are effectively two ways this can happen. In a first way, host terminals in the network broadcast a server soliciting message (SSM). A proxy server in the network responds by sending back to the host terminal a server response message (SRM). In a second way, the proxy server in a network broadcasts a client request message (CRQM) to the local network. Responsive thereto, host terminals (which can be considered to be proxy server clients) send back a client registration message (CRGM). In this way the presence of the proxy servers in the networks is registered by host terminals in the networks in a similar way as the presence of agents (home agents, foreign agents) is currently registered in standard mobile IP. The implementation of the technique for nodes to register with proxy servers will be within the scope of one skilled in the art.

As discussed hereinabove, to successfully establish a quality of service session between the correspondent node and the mobile node when the correspondent node is sending a message to the mobile node, it is necessary to establish an RSVP session with two sections. Generally speaking, a first section of the quality of service session must be established between the correspondent network and the mobile nodes home network, and a second section of the quality of service session must be established between the home network and the foreign network.

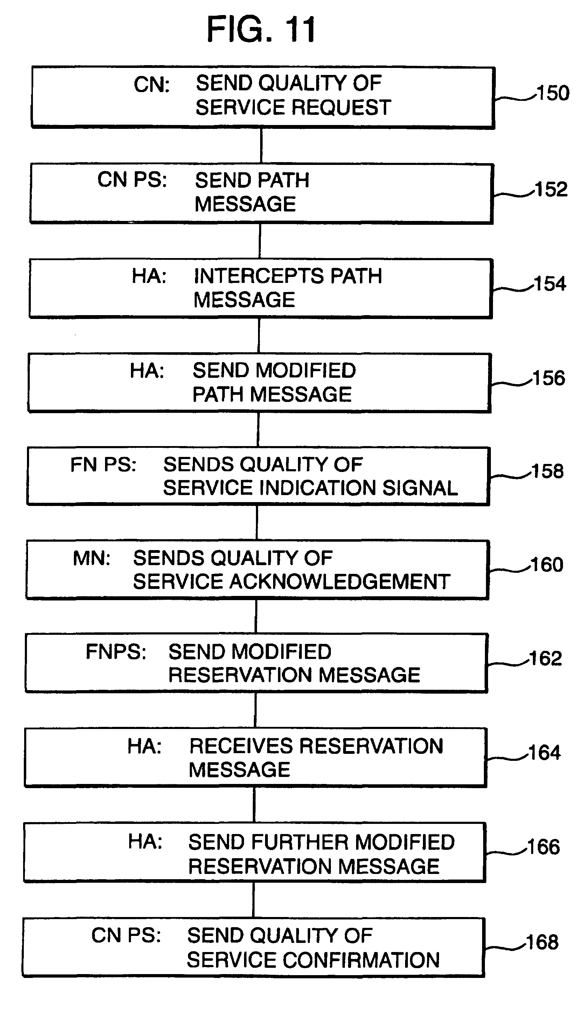

The technique for establishing the first quality of service session, and particularly an RSVP session in mobile IP, for the network arrangement of Figure 12, will now be described with the aid of the flow diagram of Figure 11.

In a step 150 the correspondent node 14a initiating a quality of service session sends a quality of service request on network link 138 to the correspondent network proxy server 142.

The quality of service request may be implicit or explicit. An explicit quality of service request from the correspondent node specifies an exact quality of service requirement. Thus an explicit quality of service request can be provided only by a correspondent node which has the functionality to support the explicit statement of a particular quality of service. An implicit quality of service request from the correspondent node specifies only the nature of the transmission to be made. For example, an implicit quality of service request may indicate that the data to be sent is video data. The proxy server then determines the appropriate quality of service in dependence on the indication of the type of data.

The correspondent network proxy server 142, in a step 152, then sends a standard RSVP Path message. This Path message is communicated to the home network proxy server via the routing switch 132a on lines 128 and 124.

The IP packets of the Path message sent by the correspondent node proxy server correspond identically to IP packets 70 of Figure 10(a), and are routed by the routing network comprising the routing switches 132 to the home agent 12. The routing takes place in exactly the same manner as described before.

In a step 154 the home agent intercepts the IP packets of the Path message, and adapts the IP packets as described above to generate the IP packets for the modified the Path message.

The IP packets of the modified Path message correspond identically to the IP packets 74 of Figure 10(b). In a step 156 the IP packets comprising the second section of the Path message 74 are transmitted by the home agent and routed via the routing network represented by the routing switch 132b to the foreign network 144.

The foreign network proxy server receives the Path message of the second section, and in a step 158, the foreign network proxy server 144 sends a quality of service indication signal to the mobile node 8 on line 146, indicating the quality of service requested by the correspondent node 10. If the mobile terminal is aware of the quality of service specification sent by the correspondent node, the mobile terminal sends a quality of service response by way of acknowledgement to the foreign network proxy server 144 in a step 160 on network link 146.

In a step 162 the foreign network proxy server then sends a modified Reservation message (i.e. modified relative to the Reservation message sent with standard RSVP), confirming the quality of service session. The modified Reservation message follows the identical route to the Path message (in reverse) via lines 136 and 126.

The format of the modified reservation message 77, for the second RSVP session, sent back by the foreign network proxy server is illustrated in Figure 10(d). As can be seen, because of the use of the foreign network proxy server 144 the source address 115 is the mobile node care-of address, and the destination address is the correspondent node's address. Thus the correct correlation exists between the source and destination addresses of the Path and Reservation messages in the second RSVP session, such that the RSVP session is supported.

Again, the message shown in Figure 10(d) is representative of the end-to-end message between the foreign network and the home network. The format shown in Figure 10(d) is not representative of the IP packets of the Reservation message, which as discussed above have source and destination addresses corresponding to the next and previous hops.

In a step 164 the home agent receives the modified Reservation message. The home agent adapts the Reservation message to the form shown in Figure 10(e), which forms a further modified Reservation message. In order to perform this adaptation, the home agent is provided with the functionality of a proxy server therein. Alternatively a home network proxy server, equivalent to the correspondent network and foreign network proxy servers, may be provided in the home network and be associated with the home agent.

The RSVP session is completed by the home agent sending the further modified Reservation message back to the correspondent network via the routing switch 132a and the network links 124 and 128. As shown in Figure 10(e) the Reservation message has as the source address 88 the home address of the mobile node, and as the destination address the address of the correspondent node. Thus the section of the RSVP session between the correspondent network and the home network is equivalent to a standard static RSVP session. The flow information required by the routing switches in the routing networks to support RSVP is fully available. The source and destination addresses are 'swapped' in the further modified Reservation message relative to the Path message.

In a step 166 the home agent then sends the Reservation message for the first section. The further modified Reservation message is then sent to the correspondent network 4 where it is received by the correspondent network proxy server 142.

The correspondent network proxy server then sends, in a step 168, a quality of service confirmation message on the network link 138 by way of acknowledgement to the correspondent node 10, indicating that the quality of service session has been set up.

The correspondent node 10 then begins sending data message packets to the mobile terminal. However the data message packets do not go via the correspondent network proxy server or the foreign network proxy server. The proxy servers are used only during the set-up of the RSVP session.

Once the RSVP session is set-up as described, and messages are sent from the correspondent node to the mobile node, it is essential that the flow identification information carried by the IP packets of the data message match that used in the set-up of the RSVP session. Thus the IP data packets, having the general format shown in Figure 2, must include the same source port number, destination port number, and protocol ID contained in the payload of the RSVP message, as well as the source and destination addresses. In this way the data IP packets are uniquely identified as being associated with the flow configured by the RSVP session. Thus the provision of the foreign network proxy server ensures that the RSVP quality of service is supported in mobile IP. The proxy servers shown in Figure 12 can thus be considered to be "RSVP proxy servers". The proxy servers dynamically adapt the destination of the RSVP messages to follow the movement of the mobile node and in the meantime, guarantee that the flow identification information and quality of service information match the data flows directed according to non-encapsulation mobile IP (NEMIP).

It will be appreciated from the foregoing description that it is essential that the proxy server (or the equivalent functionality of the proxy server) is provided in the foreign network, that is a network which accommodates host terminals normally resident in other networks, if quality of service is to be supported in mobile IP.

The provision of the RSVP proxy server (or its functional equivalent) in the foreign network guarantees that the established RSVP session (in particular, the second section of the RSVP session) follows the movement of the mobile node whilst at the same time recording the correct flow information matching that of the data flows which follow that same path of the RSVP session, regardless of the change of the mobile node's point of network attachment.

No host terminal, when transmitting, will know whether the host terminal it is transmitting to is a mobile node, or whether it is in a foreign network having an RSVP proxy server. To ensure support of RSVP with mobile IP, each network which is capable of acting as a foreign network to host mobile nodes should be provided with a proxy server (or its equivalent functionality) with the functions as described herein. The above description of the functional control as performed by the proxy server in a foreign network is essential to supporting quality of service in a mobile environment.

Referring to Figure 12, the essential requirement to support a quality of service session for a correspondent node in the correspondent network desiring to send data messages to the mobile node, is that the foreign network in which the mobile node is located must have a proxy server or its functional equivalent. The correspondent node can then directly set up the RSVP session itself without the need of the correspondent node proxy server.

The provision of the correspondent node proxy server, however, has the advantage that it enables terminals in the correspondent node not having RSVP functionality to initiate RSVP sessions. The proxy server provides a technique for configuring a quality of service session which is both platform and application independent. By providing a dedicated means for establishing quality of service sessions, then current and future quality of service incapable host terminals can have a quality of service session set-up and thus their quality of service control enabled across the transmit path to their communication peers. The requirements for complicated and intensive computing as induced in many quality of service control signaling and control mechanisms, and strain on battery power for wireless/mobile terminals, is avoided.

In an alternative application, as mentioned consistently hereinabove, the functionality of the proxy server performed in the foreign network is performed in the mobile node itself. In such an application the mobile node will already be RSVP capable, and will have an RSVP daemon to support standard RSVP sessions. In such an application responsive to receipt of the modified Path message from the home network the mobile node will generate the standard RSVP message format shown in Figure 10(c). The proxy server functionality embedded in the RSVP daemon of the mobile node will then modify this Reservation message to generate the modified Reservation message of Figure 10(d). The modified Reservation message is then transmitted directly from the mobile node.

It should be noted that the examples described herein throughout this text utilise standard RSVP. No change to the standard RSVP is envisaged or proposed.

The solution to supporting quality of service in mobile IP described hereinabove with reference to Figure 12 relates specifically to the co-located care-of address working mode, where the foreign network does not include a foreign agent. The technique also applies to the foreign agent care-of address working mode where the foreign network includes a foreign agent. However, before the quality of service session can be initiated, in foreign agent care-of address mode special precautions must be taken, as described hereinafter.

In the foreign agent care-of address working mode using non-encapsulation mobile IP, as described hereinabove with reference to Figure 6, a mobile node identifier is allocated to each mobile node in the foreign network and attached to the IP packets sent from the home agent to the foreign agent.

The mobile node identifier uniquely identifies the destination of the IP packet in the foreign network. However, when the mobile node is in the foreign network, the MNID is not available to the routing switches between the home agent and the foreign agent.

As also described hereinabove, the flow of a message is identified by flow identification information contained in the message. In the foreign agent care-of address working mode, if quality of service sessions are being configured between a particular correspondent node and several mobile nodes all in the same foreign network and served by the same foreign agent, then the source address (i.e. the address of the correspondent node) is the same for all information flows, and the destination addresses (the foreign agent care-of address, i.e. effectively the foreign agent address) is the same for all information flows between the home agent and the foreign network. There is also a strong possibility that the the protocol ID for each of the message flows will be the same.

In this situation, the ability to distinguish between different message flows between the home agent and the foreign agent will depend upon the source or destination port numbers being different. However, it is again possible that two different message flows may also have the same source and destination port numbers. In such a case, the routing switches between the home agent and the foreign agent may be unable to distinguish between two different flows having the same source and destination addresses, source and destination port numbers, and protocol ID. Unless the routing switches are modified to be able to retrieve the mobile node identifier from the message flows in addition to the usual flow identification information, the routing switches will not be able to uniquely identify two or more different flows.

It is, of course, undesirable to alter the design of the routing switches or other routing devices between the home agent and the foreign agent, and thus as discussed below there is presented herein a solution which guarantees the unique identification of different flows between the home agent and the foreign agent. The solution avoids any clash between port numbers in the flow identification information of messages.

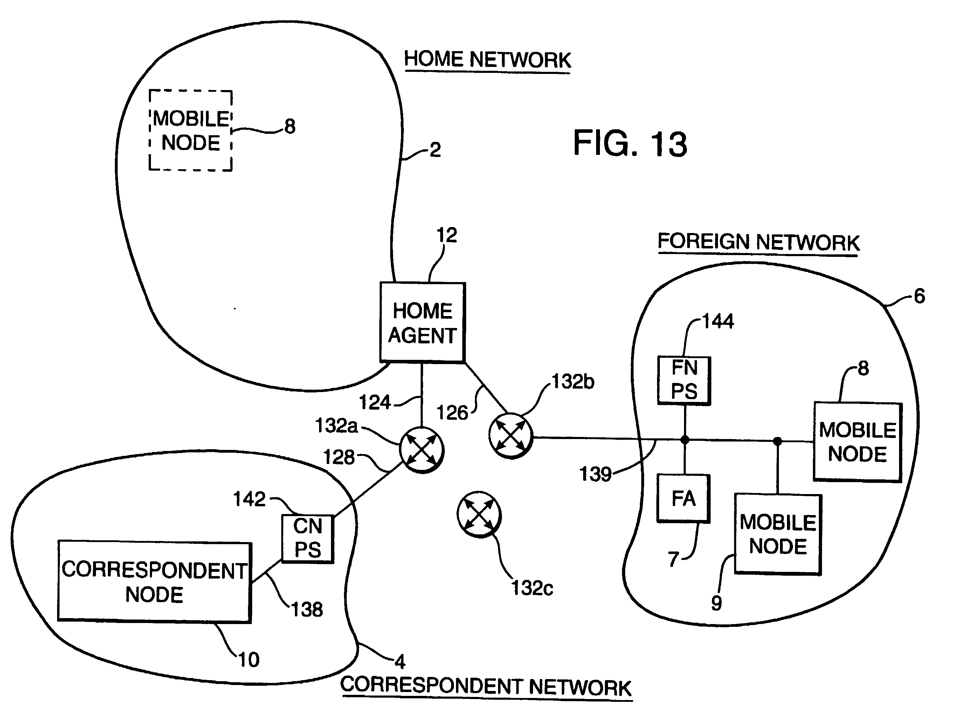

The network arrangement in Figure 13 exemplifies the scenario of this problem. The network arrangement of Figure 13 corresponds to that of Figure 12, with the addition of the foreign agent 7 (as shown in Figure 6), and an additional mobile node 9. Both mobile nodes 8 and 9 are served by the foreign agent 7.

In Figure 13 the two mobile nodes 8 and 9, the foreign network proxy server 144, and the foreign agent 7 are all shown interconnected by a network link connection 139 which connects to the routing switch 132b in the routing network. In fact, as will be understood by one skilled in the art, in all of the respective networks the various elements therein (terminals, where applicable proxy servers, and where applicable home/foreign agents) the interconnections therebetween are provided on a common network link, for example Ethernet.

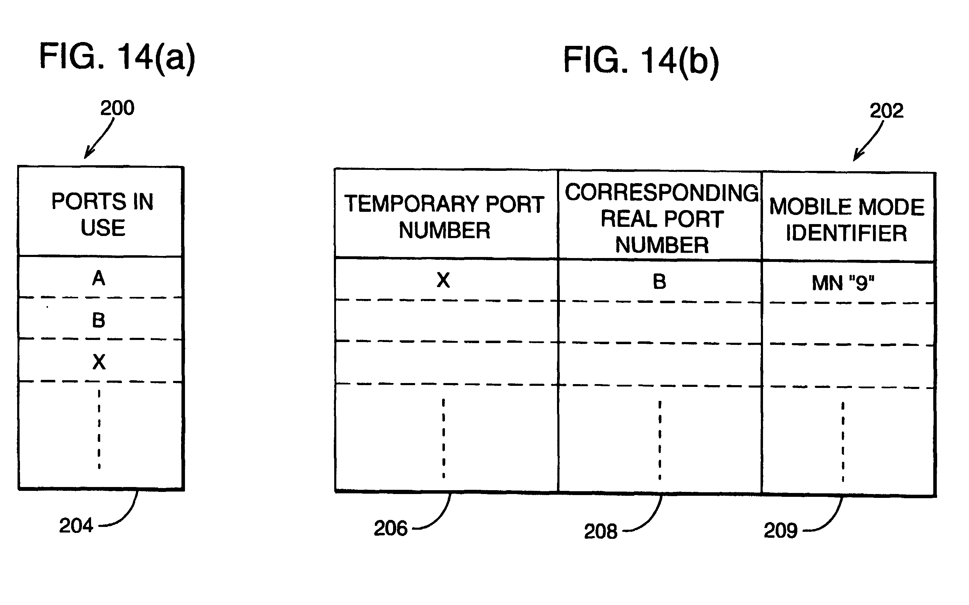

In the network arrangement of Figure 13, each proxy server, or each terminal including the functionality of the proxy server, includes a 'port in use' memory and a 'temporary port replacement memory'. As shown in Figure 14(a) the port in use memory 200 comprises a single column 204, which includes all those port numbers currently in use. As shown in Figure 14(b) the temporary port replacement memory 202 includes a column 206 for storing the value of an allocated temporary port number, a column 208 for storing the corresponding 'real' port numbers, and a column 209 for storing the mobile node identifiers (MNIDs).

In the present example the proxy server functionality of the home agent 12 and the foreign network proxy server 144 each have a 'port in use' memory and a 'temporary port replacement' memory. It should be noted that in this example there is no requirement for the correspondent network proxy server 142 to have a 'ports in use' or 'temporary port replacement memory'. This is because there is no problem in distinguishing the flow of information between the correspondent network and the home network, since the flow is uniquely identified at least by the destination address, which is the mobile node's home address.

In the example memory entries of Figure 14, the 'ports in use' memory indicates that the port numbers A, B and X are in use. The 'temporary port replacement' memory indicates that a temporary port X has been allocated, and that this port corresponds to an actual port number of B, associated with the mobile node 9.

Each of the other proxy servers which are peers of the foreign agent proxy server will store this information in their own equivalent port in use and 'temporary port replacement' memories. A peer of the foreign agent proxy server for this purpose is any home agent proxy server (or home agent with equivalent functionality) which is in communication with a mobile node connected in foreign agent care-of address mode in the foreign network to the foreign network proxy server.

The allocation of the temporary ports preferably takes place during the procedure in which the mobile nodes register with the foreign agent 7 and the proxy server 144. At the same time as the mobile node's register with the proxy server, they also notify the proxy server of the port numbers of all the applications which they support.

Thus the mobile node 8 notifies the proxy server 144 of all the port numbers of all the applications available in the mobile node 8. The proxy server 144 then checks each of these port numbers against the 'port in use' memory 204. If any port clashes are detected then the proxy server 144 allocates a temporary port number to the real port number, and stores the temporary port number and real port number together with the mobile node's identifier in the memory 202. The proxy server performs a similar exercise for each other mobile node registered with the foreign agent 7.

On each registration of a mobile node, the foreign network proxy server notifies it's peers of the allocation of temporary port numbers. Thus the foreign network proxy server notifies the home agent 12, including the functionality of a proxy server, and the home agent updates its 'port in use' and 'temporary port allocation' memories accordingly.

For the purposes of an illustrative example, it is assumed that the mobile node 8 has only one application available, which has a port number of B. Thus, when mobile node 8 registers with the foreign network proxy server 144, the port number B is entered into the 'ports in use' memory 200, and this information is transmitted to the home agent 12, which updates its own 'ports in use' memory accordingly. It is assumed that the mobile node 9 has two applications available, which have port numbers A and B respectively. Thus, when mobile node 9 registers with foreign network proxy server 144, a port clash in respect of port number B is identified. This clash may be identified by a simple check of the port numbers of the applications available in the mobile node 9 with the contents of the 'ports in use' memory. The foreign network proxy server 144 therefore allocates a temporary port number to the port number B for the mobile node 9, and this information is stored in the 'temporary port replacement' memory 202. Thus as shown in Figure 14(b) the 'temporary port replacement' memory 202 indicates that the temporary port number X has been allocated to the port number B for the mobile node 9. The proxy server 144 also updates the 'port in use' memory 200 to additionally show the ports A and X as in use. The foreign network proxy server then communicates the updated contents of both the 'ports in use' memory and the 'temporary port replacement' memory to the home agent 12, which updates its own 'ports in use' and 'temporary port replacement' memories accordingly.

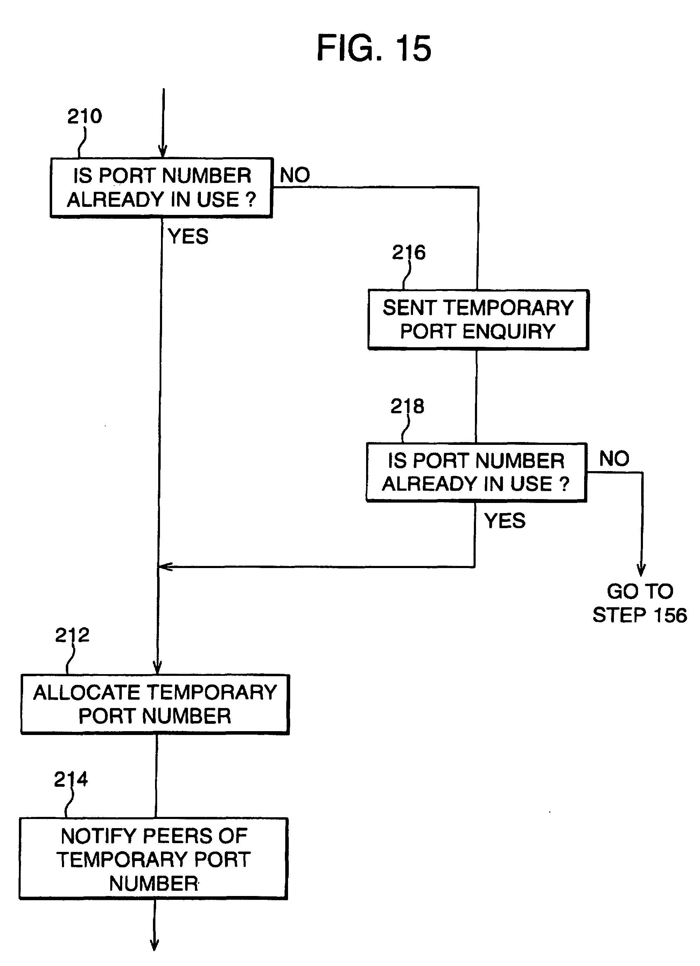

The steps for determining whether allocation of a temporary port is necessary on registration of a mobile node are illustrated in Figure 15. In a step 210 the foreign network proxy server determines whether the port number of an application in a mobile node which is registering with it is already in use. This is determined by comparing the port number of the application to the values in the column 204 of the memory 200.

In the present example, as discussed above, when mobile node 9 registers, port number B is already in use. In a step 212 the foreign node proxy server therefore allocates a temporary port number. The temporary port number may be simply chosen from those temporary port numbers not currently in use, which can be determined from an inspection of column 206 of memory 202. In this example the temporary port number X is allocated as discussed above.

In a step 214 the home agent updates the contents of the columns 206 and 208 of the temporary port replacement memory by entering the port number X in the column 206 and an associated port number B in the column 208, on notification from the foreign network proxy server.

Now suppose the correspondent node 10 attempts to set up a quality of service session with the mobile node 9 in the foreign network. The port number (i.e. application) in the mobile node 9 identified in the new quality of service session is B.

According to the flow chart of Figure 11, in the step 150 the correspondent node sends a quality of service request to the correspondent node proxy server on the network link 138. In the step 152 the correspondent node proxy server 142 sends the Path message, and in the step 154 the home agent intercepts the Path message.

However, before the home agent sends the modified Path message in step 156, it is necessary to check whether a temporary port has been allocated for the particular port number in the destination mobile node. The home agent, when modifying the Path message to include the mobile node identifier, checks for a match in the 'temporary port replacement' memory between the mobile node identifier of the current message and the column 209, and between the destination port of the current message and the column 208. If a match is detected, then the home agent replace the destination port number with the appropriate temporary port number.

The mobile node identifier (MNID) for use between the home network and the foreign network is still allocated and notified to the home agent in the same manner as described hereinabove, as part of the mobile node's registration process with the foreign agent.

Once any necessary port replacement has taken place, then the home agent moves onto step 156, and the Path and Reservation messages are transferred as described hereinabove to set up the quality of service session.

Another modification to the flow diagram of Figure 11 occurs in step 158. Prior to sending the quality of service indication signal to the mobile node, the foreign network proxy server looks up the destination port number and the MNID in the columns 206 and 209 of its memory 202. If a match is found the destination port number is replaced with the corresponding value from the column 208, and then the quality of service indication signal is sent.

Similarly in the step 162, prior to sending the modified Reservation message the destination port number of the mobile node is replaced with the temporary value in the column 206.

In addition, in step 166 prior to the home agent sending the further modified reservation message, the home agent replaces the temporary port number with the real port number before forwarding the further modified Reservation message to the correspondent network.

If a temporary port number is allocated for any particular quality of service session between the home agent and the foreign network, then all data packets will continue to be transferred via the foreign agent and the home agent, the foreign agent and the home agent being adapted to ensure the correct substitution and replacement of temporary port numbers.

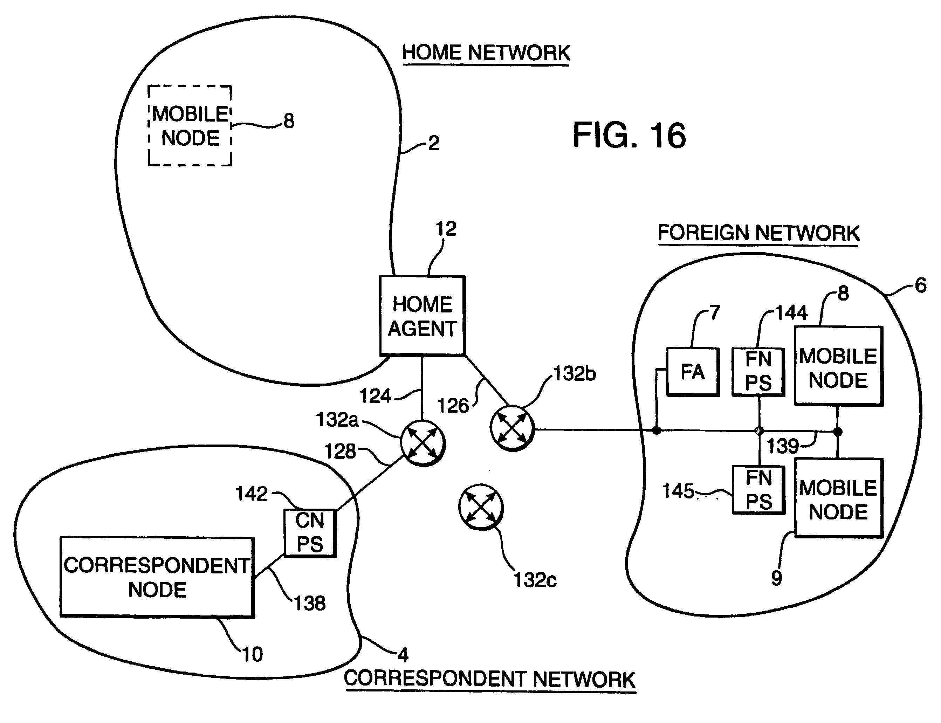

Figure 16 shows a still further modified version of the network arrangement of Figure 13. In this arrangement each of the mobile nodes 8 and 9 is still supported by a common foreign agent 7, but there is provided a separate foreign agent proxy server for each of the mobile nodes 8 and 9. Thus mobile node 8 is associated with the foreign agent 7 and the foreign network proxy server 144, and mobile node 9 is associated with the foreign agent 7 and a foreign network proxy server 145. All the elements are again linked by the common network link 139.

In such a scenario, the mobile nodes connected to different foreign network proxy servers operate independently of each other. Thus if a correspondent node, such as node 10, communicates with both the mobile nodes 8 and 9, then the communication is via the respective foreign agent proxy servers, and the respective foreign agent proxy servers do not know of the operation of the other.

Thus, for example, for a communication between correspondent node 10 and mobile node 8, the communication peer of the functionality of the proxy server in the home agent 12 is the foreign network proxy server 144 only. Thus if a temporary port is allocated in this link, the foreign network proxy server 145 is not notified. As discussed hereinabove, the routing switches between the home agent and the foreign network cannot identify the MNID attached to messages. Therefore the possibility exists that there could be a port clash between two different mobile nodes served by the same foreign agent but different foreign agent proxy servers in the same foreign network. For this reason, in such a scenario, the method illustrated by the flow diagram of Figure 15 is provided with the additional steps 216 and 218. After it is determined, by a foreign network proxy server (or its functional equivalent) that a port number is not already in use, then the proxy server sends a temporary port enquiry message to other proxy servers (or the functional equivalent) in the same foreign network. Thus, in the scenario of Figure 16, if it is determined by the foreign network proxy server 144 that a port number is not currently in use, the foreign network proxy server 144 sends a temporary port enquiry to the foreign network proxy server 145.

In step 218 the foreign network proxy server 144 receives a reply from the other proxy servers in the foreign network, or alternatively receives no reply after a time out. The foreign network proxy server 144 then determines whether a temporary port number should be allocated. If a temporary port number needs to be allocated then this is done in a step 212 as before. Otherwise the method reverts to step 156.

A modification of the flow chart of Figure 15, when the scenario of Figure 16 applies, would be for the step 216 to be carried out in conjunction with the step 210. Thus, if a port clash is identified in step 210, steps 216 and 218 are first carried out before allocation of the temporary port number. This ensures that an already used temporary port number is not allocated.

It is probable that the step 216 of sending a temporary port enquiry message will always be carried out, since a foreign network proxy server, or its functional equivalent, will not be (or need not be) aware of whether there are other foreign network proxy servers in the same network.

Although it is described hereinabove that the destination port numbers are temporarily replaced in response to a clash of port numbers between different quality of service sessions, it will be appreciated that other elements of the flow identification information may be temporarily replaced so as to ensure a unique flow identification.

Although in the above description the technique for supporting a quality of service session when the foreign network includes a foreign agent advantageously utilises the described, preferred technique for supporting a quality of service session between a foreign network and a mobile node with a foreign agent care-of address, where a mobile node identifier is attached to the message packets between the home agent and the foreign network, it will be appreciated that the application of the technique described herein may be more widely applicable, and is not limited to such a scenario. The above described new technique may be utilised in any technique for supporting quality of service in mobile IP when the nature of the technique for supporting the quality of service session is such that a clash may occur between the flow identification information for different information flows.

## Claims

1. A method of establishing an IP quality of service session between a correspondent node (10) and a mobile node (8), the mobile node (8) having a home address in a home network (2) and being temporarily connectable in a foreign network (6) having a foreign agent supporting associated with at least one further mobile node, wherein IP packets are directed to the mobile node from the correspondent node via the home network, the quality of service session being maintained in dependence on flow identification information in the IP packets, the method comprising: determining whether the flow identification information of a quality of service session to be configured matches the flow identification information of an existing quality of service session; responsive to a match, allocating temporary flow identification information to the quality of service session to be configured.

2. The method of claim 1 wherein the temporary flow identification information is allocated between the home network and the foreign network.

3. The method of claim 1 or claim 2 wherein the steps of determining a match and allocating temporary flow identification information are carried out in the foreign network.

4. The method of claim 3 wherein the temporary flow identification information is notified to the home network by the foreign network.

5. The method of claim 1, wherein the flow identification information includes an identification of an application provided at the mobile node, wherein the step of allocating temporary flow identification information comprises allocating a temporary identification of the application.

6. The method of claim 5 wherein the application is identified by a port number.

7. The method of any preceding claim in which the quality of service session is an RSVP session.

8. The method of any preceding claim in which the temporary flow identification information is substituted in the home netwwork and replaced at the foreign agent.

9. A mobile IP network arrangement adapted to establish an IP quality of service session between a correspondent node (10) and a mobile node (8), the mobile node (8) having a home address in a home network (2) and being temporarily connectable in a foreign network (6) having a foreign agent associated with at least one further mobile node, wherein IP packets are directed to the mobile node from the correspondent node via the home network, the quality of service session being maintained in dependence on flow identification information in the IP packets, the mobile IP network arrangement having means for determining whether the flow identification information of a quality of service session to be configured matches the flow identification information of an existing quality of service session; the means being responsive to a match for allocating temporary flow identification information to the quality of service session to be configured.

10. The mobile IP network arrangement of claim 9 in which the means is provided in the foreign network.

11. The mobile IP network arrangement of claim 10 the two mobile nodes are each associated with a respective one of at least two means, wherein the means are further adapted to determine whether the flow identification information of a quality of service session between one of the mobile nodes and a correspondent node matches the flow identification information of a quality of service session between the other of the mobile nodes and a correspondent node.

12. The mobile IP network arrangement of any one of claims 9 to 11 in which the means for allocating teemporary flow identification information is provided in the foreign network.

13. The mobile IP network arrangement of any one of claim 9 to 12 in which the home network includes means for substituting the temporary flow identification information to the quality of service session responsive to the means for allocating the temporary flow identification information in the foreign network.

14. The mobile IP network arrangement of claim 13 in which the foreign agent is adapted to remove the substituted flow identification information.

## Patentansprüche

1. Verfahren zur Herstellung einer IP-Dienstgütesitzung zwischen einem entsprechenden Knoten (10) und einem mobilen Knoten (8), der eine Heimatadresse in einem Heimatnetz (2) aufweist und zeitweilig in einem fremden Netz (6) mit einem fremden Agenten verbindbar ist, der unterstützend mindestens einem weiteren mobilen Knoten zugeordnet ist, wobei IP-Pakete von dem entsprechenden Knoten aus an den mobilen Knoten über das Heimatnetz gerichtet sind, wobei die Dienstgütesitzung in Abhängigkeit von Flußidentifikationsinformationen in den IP-Paketen aufrechterhalten wird, mit folgenden Schritten:
Bestimmen, ob die Flußidentifikationsinformationen einer zu konfigurierenden Dienstgütesitzung mit den Flußidentifikationsinformationen einer bestehenden Dienstgütesitzung übereinstimmen; Zuteilen von zeitweiligen Flußidentifikationsinformationen zu der zu konfigurierenden Dienstgütesitzung als Reaktion auf eine Übereinstimmung.

2. Verfahren nach Anspruch 1, wobei die zeitweiligen Flußidentifikationsinformationen zwischen dem Heimatnetz und dem Fremdnetz zugeteilt werden.

3. Verfahren nach Anspruch 1 oder Anspruch 2, wobei die Schritte des Bestimmens einer Übereinstimmung und des Zuteilens von zeitweiligen Flußidentifikationsinformationen im Fremdnetz ausgeführt werden.

4. Verfahren nach Anspruch 3, wobei die zeitweiligen Flußidentifikationsinformationen vom fremden Netz dem Heimatnetz mitgeteilt werden.

5. Verfahren nach Anspruch 1, wobei die Flußidentifikationsinformationen eine Identifikation einer am mobilen Knoten vorgesehenen Anwendung einschließen, wobei der Schritt des Zuteilens von zeitweiligen Flußidentifikationsinformationen das Zuteilen einer zeitweiligen Identifikation der Anwendung umfaßt.

6. Verfahren nach Anspruch 5, wobei die Anwendung durch eine Anschlußnummer identifiziert wird.

7. Verfahren nach einem beliebigen vorhergehenden Anspruch, bei dem die Dienstgütesitzung eine RSVP-Sitzung ist.

8. Verfahren nach einem beliebigen vorhergehenden Anspruch, bei dem die zeitweiligen Flußidentifikationsinformationen im Heimatnetz substituiert und beim fremden Agenten ausgewechselt werden.

9. Mobile IP-Netzanordnung zur Herstellung einer IP-Dienstgütesitzung zwischen einem entsprechenden Knoten (10) und einem mobilen Knoten (8), der eine Heimatadresse in einem Heimatnetz (2) aufweist und zeitweilig in einem fremden Netz (6) mit einem mindestens einem weiteren mobilen Knoten zugeordneten fremden Agenten verbindbar ist, wobei IP-Pakete von dem entsprechenden Knoten über das Heimatnetz an den mobilen Knoten gerichtet sind, wobei die Dienstgütesitzung in Abhängigkeit von Flußidentifikationsinformationen in den IP-Paketen aufrechterhalten wird, mit Mitteln zum Bestimmen, ob die Flußidentifikationsinformationen einer zu konfigurierenden Dienstgütesitzung mit den Flußidentifikationsinformationen einer bestehenden Dienstgütesitzung übereinstimmen; wobei die Mittel zur Zuteilung von zeitweiligen Flußidentifikationsinformationen zu der zu konfigurierenden Dienstgütesitzung auf eine Übereinstimmung reagieren.

10. Mobile IP-Netzanordnung nach Anspruch 9, wobei die Mittel im fremden Netz vorgesehen sind.

11. Mobile IP-Netzanordnung nach Anspruch 10, wobei die zwei mobilen Knoten jeweils einem entsprechenden von mindestens zwei Mitteln zugeordnet sind, wobei die Mittel weiterhin dazu geeignet sind, zu bestimmen, ob die Flußidentifikationsinformationen einer Dienstgütesitzung zwischen einem der mobilen Knoten und einem entsprechenden Knoten mit den Flußidentifikationsinformationen einer Dienstgütesitzung zwischen dem anderen der mobilen Knoten und einem entsprechenden Knoten übereinstimmen.

12. Mobile IP-Netzanordnung nach einem beliebigen der Ansprüche 9 bis 11, wobei die Mittel zum Zuteilen von zeitweiligen Flußidentifikationsinformationen im fremden Netz vorgesehen sind.

13. Mobile IP-Netzanordnung eines beliebigen von Anspruch 9 bis 12, wobei das Heimatnetz Mittel zum Ersetzen der zeitweiligen Flußidentifikationsinformationen für die Dienstgütesitzung als Reaktion auf das Mittel zum Zuteilen der zeitweiligen Flußidentifikationsinformationen im fremden Netz enthält.

14. Mobile IP-Netzanordnung nach Anspruch 13, wobei der Fremdagent die ersetzten Flußidentifikationsinformationen entfernen kann.

## Revendications

1. Procédé servant à établir une session à qualité de service IP entre un noeud correspondant (10) et un noeud mobile (8), le noeud mobile (8) possédant une adresse locale dans un réseau local (2) et pouvant être connecté temporairement à un réseau externe (6) possédant un agent extérieur pour assurer la prise en charge et associé à un noeud mobile supplémentaire au moins, cas dans lequel les paquets IP sont dirigés vers le noeud mobile à partir du noeud correspondant par l'intermédiaire du réseau local, la session à qualité de service étant maintenue en fonction des informations d'identification de flux dans les paquets IP, le procédé comprenant les étapes consistant à : déterminer si les informations d'identification de flux d'une session à qualité de service restant à configurer concordent ou non avec les informations d'identification de flux d'une session à qualité de service existante ; en réaction à une concordance, affecter des informations d'identification de flux temporaires à la session à qualité de service restant à configurer.

2. Procédé de la revendication 1 dans lequel les informations d'identification de flux temporaires sont affectées entre le réseau local et le réseau externe.

3. Procédé de la revendication 1 ou de la revendication 2 dans lequel les étapes consistant à déterminer une concordance et à affecter des informations d'identification de flux temporaires sont réalisées dans le réseau externe.

4. Procédé de la revendication 3 dans lequel les informations d'identification de flux temporaires sont notifiées au réseau local par le réseau externe.

5. Procédé de la revendication 1 dans lequel les informations d'identification de flux comportent une identification d'une application fournie au niveau du noeud mobile, dans lequel l'étape consistant à affecter des informations d'identification de flux temporaires comprend l'affectation d'une identification temporaire de l'application.

6. Procédé de la revendication 5 dans lequel l'application est identifiée par un numéro de port.

7. Procédé de l'une quelconque des revendications précédentes dans lequel la session à qualité de service est une session RSVP (protocole de réservation de ressources).

8. Procédé de l'une quelconque des revendications précédentes dans lequel les informations d'identification de flux temporaires sont substituées dans le réseau local et sont remplacées au niveau de l'agent extérieur.

9. Agencement de réseau IP mobile adapté pour établir une session à qualité de service IP entre un noeud correspondant (10) et un noeud mobile (8), le noeud mobile (8) possédant une adresse locale dans un réseau local (2) et pouvant être connecté temporairement à un réseau externe (6) possédant un agent extérieur lequel est associé à un noeud mobile supplémentaire au moins, cas dans lequel les paquets IP sont dirigés vers le noeud mobile à partir du noeud correspondant par l'intermédiaire du réseau local, la session à qualité de service étant maintenue en fonction des informations d'identification de flux dans les paquets IP, l'agencement de réseau IP mobile possédant des moyens pour déterminer si les informations d'identification de flux d'une session à qualité de service restant à configurer concordent ou non avec les informations d'identification de flux d'une session à qualité de service existante ; les moyens réagissant à une concordance afin d'affecter des informations d'identification de flux temporaires à la session à qualité de service restant à configurer.

10. Agencement de réseau IP mobile de la revendication 9, dans lequel les moyens sont prévus dans le réseau externe.

11. Agencement de réseau IP mobile de la revendication 10, chacun des deux noeuds mobiles étant associé à un moyen respectif parmi deux moyens au moins, dans lequel les moyens sont adaptés en outre de façon à déterminer si les informations d'identification de flux d'une session à qualité de service entre l'un des noeuds mobiles et un noeud correspondant concordent avec les informations d'identification de flux d'une session à qualité de service entre l'autre des noeuds mobiles et un noeud correspondant.

12. Agencement de réseau IP mobile de l'une quelconque des revendications 9 à 11, dans lequel les moyens servant à affecter les informations d'identification de flux temporaires sont prévus dans le réseau externe.

13. Agencement de réseau IP mobile de l'une quelconque des revendications 9 à 12, dans lequel le réseau local comporte des moyens permettant de substituer les informations d'identification de flux temporaires destinées à la session à qualité de service, en réaction aux moyens servant à affecter les informations d'identification de flux temporaires dans le réseau externe.

14. Agencement de réseau IP mobile de la revendication 13, dans lequel l'agent extérieur est adapté de façon à enlever les informations d'identification de flux substituées.
